# FASCICULE DE BREVET EUROPEEN

(11) **EP 3 121 481 B1**
(45) Date de publication et mention de la délivrance du brevet: **06.11.2019**
(21) Numéro de dépôt: 16178775.9
(22) Date de dépôt: 11.07.2016
(51) Int. Cl.: F16F 15/123, F16F 15/14, F16F 15/134

(54) **DISPOSITIF D AMORTISSEMENT DE TORSION POUR UN SYSTEME DE TRANSMISSION DE VEHICULE AUTOMOBILE**
VORRICHTUNG ZUR TORSIONSSCHWINGUNGSDÄMPFUNG FÜR DAS ANTRIEBSSYSTEM EINES KRAFTFAHRZEUGS
DEVICE FOR DAMPING TORSION FOR A MOTOR VEHICLE TRANSMISSION SYSTEM

(30) Priorité: 24.07.2015 FR 1557110
(43) Date de publication de la demande: 25.01.2017
(73) Titulaire: Valeo Embrayages, 80009 Amiens Cedex 2 (FR)
(72) Inventeur: COMMEINE, Emmanuel, 80290 COURCELLES SOUS MOYENCOURT (FR); CAILLERET, Franck, 80009 AMIENS (FR); LAFORGE, Thibault, 80670 PERNOIS (FR); VERHOOG, Roel, 60190 GOURNAY SUR ARONDE (FR); LEBAS, Gilles, 80800 VILLERS BRETONNEUX (FR)
(74) Mandataire: Cardon, Nicolas

(56) Documents cités:
- WO-A1-2012/150399
- WO-A1-2015/092210
- FR-A1- 3 011 603

## Description

La présente invention concerne un dispositif d'amortissement de torsion, notamment pour un système de transmission de véhicule automobile.

Dans une telle application, le dispositif d'amortissement de torsion peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement de torsion peut être intégré à un double volant amortisseur, à un disque de friction de l'embrayage ou à un convertisseur de couple hydrodynamique.

L'invention concerne également un ensemble de transmission pour un véhicule automobile de type hybride dans lequel une machine électrique est disposée, dans la chaîne de transmission, entre le moteur et la boîte de vitesses.

Un tel dispositif comporte de façon générale un élément d'entrée de couple, un élément de sortie de couple, et des organes élastiques montés entre l'élément d'entrée et l'élément de sortie de couple et agissant à l'encontre de la rotation de l'élément d'entrée et l'élément de sortie de couple l'un par rapport à l'autre.

Lorsque le dispositif de transmission de couple est de type LTD (Long Travel Damper), il comprend plusieurs groupes d'organes élastiques, les organes élastiques d'un même groupe étant agencés en série par l'intermédiaire d'un organe de phasage de façon à ce que les organes élastiques de chaque groupe se déforment en phase les uns avec les autres.

Un tel organe de phasage présente une stabilité amoindrie puisqu'il est centré essentiellement par les organes élastiques. Un tel dispositif d'amortissement de torsion est décrit dans le document FR 3011603.

L'invention a notamment pour but d'apporter une solution simple, efficace et économique à ce problème.

A cet effet, elle propose un dispositif d'amortissement de torsion, pour un véhicule automobile, comportant :
- un premier élément mobile apte à recevoir un couple d'entrée et un second élément mobile apte à transmettre un couple de sortie, le premier élément et le deuxième élément étant mobiles en rotation autour d'un axe X, coaxiaux,
- un moyeu central couplé en rotation au deuxième élément et apte à être relié à un arbre d'entrée d'une boite de vitesses,
- au moins un groupe d'organes élastiques montés entre le premier élément et le second élément et agissant à l'encontre de la rotation de premier élément et du second élément l'un par rapport à l'autre,
- un organe de phasage, mobile en rotation autour de l'axe X et formé par une première partie et une deuxième partie, pour agencer les organes élastiques de ce groupe en série de façon à ce que les organes élastiques de chaque groupe se déforment en phase les uns avec les autres, et
- un amortisseur pendulaire comprenant un organe de support de pendule apte à se déplacer en rotation autour de l'axe de rotation sur lequel est monté mobile au moins une masselotte, l'organe de support de pendule étant lié en rotation à l'organe de phasage, l'organe de phasage étant centré sur le moyeu central par l'intermédiaire de l'organe de support de pendule.

Selon un mode de réalisation de l'invention, le dispositif comporte un palier est monté entre le support de pendule et le moyeu central.

Selon un mode de réalisation, le palier peut être un palier lisse ou palier à roulements ou un palier conique.

Le palier conique forme par son cône à la fois un centrage et une butée axiale. Il permet d'accepter les défauts d'alignement de l'arbre d'entrée de la boîte de vitesses et de sortie du moteur (désaxage, défaut angulaire).

Selon un exemple ne faisant partie de l'invention, le palier est formé d'une seule pièce monobloc.

Selon un mode de réalisation de l'invention, l'élément d'entrée est formé par une première rondelle de guidage et par une deuxième rondelle de guidage reliées entre elles, le palier servant au centrage du support de pendule et d'une des rondelles de guidage.

Selon un mode de réalisation de l'invention, le moyeu central comporte une partie radiale et une partie cylindrique à partir de laquelle s'étend la partie radiale, le palier est formé par une première pièce et une deuxième pièce distinctes l'une de l'autre, la première pièce étant proche de la partie radiale et la deuxième pièce étant éloignée de la partie radiale.

Selon un mode de réalisation de l'invention, l'élément d'entrée est formé par une première rondelle de guidage et par une deuxième rondelle de guidage reliées entre elles, la première pièce du palier servant au centrage d'une des rondelles de guidage et la deuxième pièce du palier servant au centrage du support de pendule.

Selon un mode de réalisation de l'invention, le deuxième palier forme une butée axiale et la périphérie radialement interne du support de pendule comporte une surface complémentaire à la butée axiale, la butée axiale étant configurée de telle manière à empêcher le déplacement axiale du support de pendule en direction de la partie radiale du moyeu.

Selon un mode de réalisation de l'invention, le premier palier comporte une protubérance axiale servant de surface d'appui axiale pour la deuxième rondelle de guidage.

L'invention a également pour objet un composant pour système de transmission d'un véhicule automobile, le composant étant notamment un double volant amortisseur, un convertisseur de couple hydrodynamique ou un disque de friction, comprenant un dispositif d'amortissement tel que précédemment décrit.

L'invention a enfin pour objet un ensemble de transmission pour véhicule automobile, destiné à être disposé entre un moteur thermique équipé d'un vilebrequin et une boîte de vitesses équipée d'un arbre d'entrée, ledit ensemble comprenant :
- une machine électrique comportant un stator et un rotor mobile en rotation autour d'un axe X ;
- un embrayage agencé pour accoupler ou désaccoupler en rotation le vilebrequin du moteur et le rotor ;
- un dispositif d'amortissement de torsion tel que précédemment décrit, le dispositif d'amortissement étant agencé pour transmettre un couple et amortir les acyclismes de rotation entre le rotor et l'arbre d'entrée de la boîte de vitesses.

L'invention sera mieux comprise et d'autres détails, caractéristiques et avantages de l'invention apparaîtront à la lecture de la description suivante faite à titre d'exemple non limitatif en référence aux dessins annexés, dans lesquels :
- Figure 1 : Un schéma d'un ensemble de transmission, selon un mode de réalisation de l'invention ;
- Figure 2 : Une demi-vue en coupe axiale d'un embrayage de friction comprenant un dispositif d'amortissement de torsion ;
- Figures 3a et 3b :des représentations tridimensionnelles du dispositif d'amortissement selon un premier côté dudit dispositif et respectivement selon un deuxième côté dudit dispositif, selon un mode de réalisation de l'invention.
- Figures 4a et 4b : des représentations schématiques du voile et de l'organe de phasage en butée dans le sens direct (D) et dans le sens rétro (R) respectivement ;
- Figure 5 : une représentation en perspective d'un voile d'un dispositif d'amortissement de torsion, selon un mode de réalisation de l'invention ;
- Figure 6 : une représentation en perspective d'une première face de l'organe de phasage, selon un mode de réalisation de l'invention ;
- Figure 7 : une représentation en perspective d'une deuxième face de l'organe de phasage, selon le même mode de réalisation que ce lui de la figure 6 ;
- Figure 8a : une représentation schématique du dispositif d'amortissement, selon un mode réalisation de l'invention ;
- Figures 8b et 8c : des coupes transversales du dispositif d'amortissement selon un axe A et un axe B de la figure 8a ;
- -Figure 9 : une représentation d'un dispositif d'amortissement comprenant un élément de butée ;
- Figure 10 : une vue en perspective du dispositif d'amortissement selon la figure 9 ;
- Figure 11 : une représentation d'un ensemble de transmission ;
- Figure 12 : Une représentation d'un dispositif d'amortissement ;
- Figure 13: Une représentation d'un dispositif d'amortissement ;
- Figure 14 : Une vue en coupe partielle d'un dispositif d'amortissement, selon une variante de l'invention ;
- figure 15: Une vue en coupe illustrant un dispositif d'amortissement selon la variante telle qu'illustrée figure 14, et
- figure 16 : une vue en coupe partielle d'un dispositif d'amortissement, selon un mode de réalisation de l'invention.

Dans la description et les revendications, on utilisera, les termes "externe" et "interne" ainsi que les orientations "axiale" et "radiale" pour désigner, selon les définitions données dans la description, des éléments d'un ensemble de transmission. Par convention, l'orientation "radiale" est dirigée orthogonalement à l'axe X de rotation de l'ensemble de transmission déterminant l'orientation "axiale" et, de l'intérieur vers l'extérieur en s'éloignant dudit axe. Les termes "externe" et "interne" sont utilisés pour définir la position relative d'un élément par rapport à un autre, par référence à l'axe X, un élément proche de l'axe est ainsi qualifié d'interne par opposition à un élément externe situé radialement en périphérie. Par ailleurs, les termes "arrière" AR et "avant" AV sont utilisés pour définir la position relative d'un élément par rapport à un autre et par rapport à la direction d'avancement du véhicule lorsque le véhicule circule en marche avant.

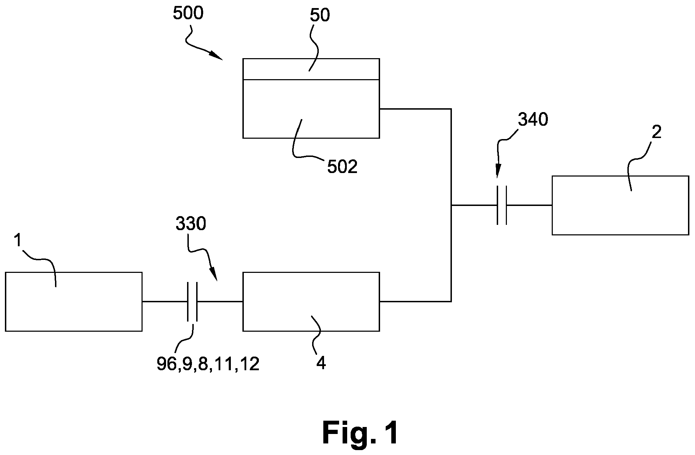

La figure 1 illustre un ensemble de transmission, disposé entre un moteur thermique 1 et une boîte de vitesses 2 selon un mode de réalisation de l'invention. L'ensemble de transmission comporte un premier embrayage de friction 330, un dispositif d'amortissement de torsion 4, une machine électrique 500 comprenant un stator 501 et un rotor 502 et un deuxième embrayage de friction 340.

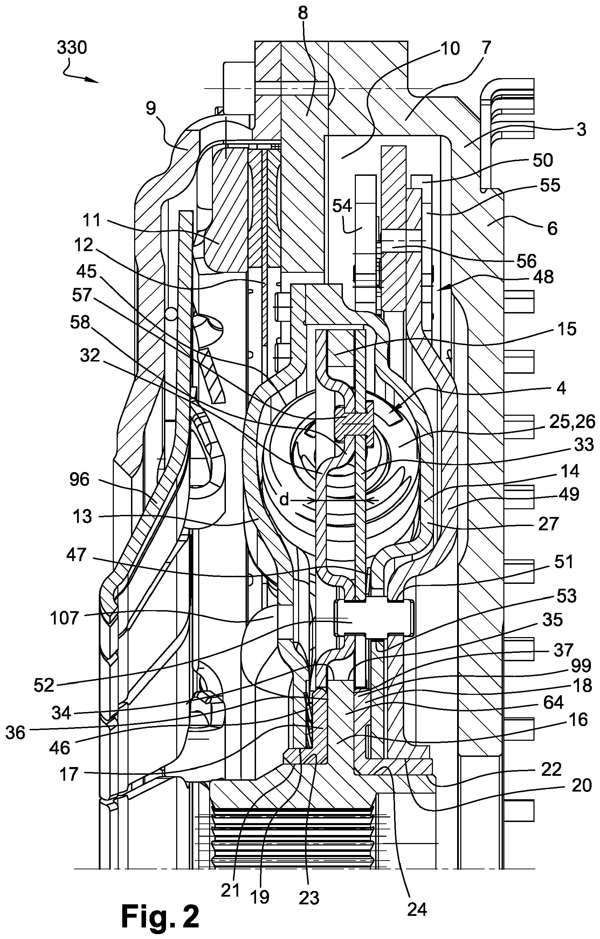

Figure 2 est illustre le premier embrayage à friction 330 associé au dispositif amortisseur de torsion 4. Le premier embrayage à friction 330 est relié à un volant d'inertie 3. Le volant d'inertie 3 comporte une première portion annulaire 6 s'étendant radialement et une portion cylindrique 7 s'étendant axialement, vers l'arrière, depuis la périphérie externe de la première portion annulaire 6. Une deuxième portion cylindrique 8 et un couvercle annulaire 9 sont fixés sur la portion cylindrique 7. La première portion annulaire 6, la portion cylindrique 7 et la deuxième portion annulaire 8 définissent une chambre annulaire 10.

Le volant d'inertie 3 comporte également des orifices (non représentés) ménagés dans la première portion annulaire 6. Des vis de fixation (non représentés), engagées dans les orifices permettent la fixation du volant d'inertie 3 à l'extrémité du vilebrequin.

L'embrayage de friction 330 comporte un plateau de réaction formé par la deuxième portion annulaire 8, un plateau de pression 11 et un disque de friction 12. Le plateau de pression 11 est mobile axialement afin d'être mis en contact avec le disque de friction 12 au moment de la transmission de couple entre le moteur thermique et l'arbre d'entrée de la boîte de vitesses. Un élément d'actionnement ou diaphragme annulaire 96 sollicite axialement le plateau de pression 11 contre le disque de friction 12 et le plateau de réaction 8.

Dans une variante non représentée, l'embrayage peut être du type normalement ouvert. Dans ce cas, c'est le mouvement d'une butée d'embrayage (non représentée) vers l'arrière qui permet de solliciter, via le diaphragme 96, le plateau de pression 11 en direction du plateau de réaction 8. Dans un tel embrayage normalement ouvert, le diaphragme 96 présente une élasticité propre à ramener ses doigts dans une position avant de repos.

L'amortissement de torsion 4 comprend une rondelle de guidage arrière 13 éloignée du moteur 1 et une rondelle de guidage avant 14 proche du moteur 1. Le dispositif d'amortissement de torsion 4 comporte également un voile 15 et un moyeu cannelé 16, formant dans cet exemple un ensemble monobloc. En variante, le voile 15 et le moyeu cannelé 16 pourraient former deux pièces distinctes et être fixés l'un à l'autre par l'intermédiaire de rivets ou d'une soudure. Le moyeu cannelé 16 est destiné à coopérer avec des cannelures de forme complémentaire portées par l'extrémité arrière (non représentée) de l'arbre d'entrée de la boîte de vitesses 2.

Les rondelles de guidage arrière 13 et avant 14 sont disposées axialement de part et d'autre du voile 15. La rondelle de guidage arrière 13 est fixée au disque de friction 12 par l'intermédiaire d'organes de fixations tels que des vis ou des rivets (non représentés). La rondelle de guidage arrière 13 présente au moins un trou 107. Dans un exemple, la rondelle de guidage arrière 13 présente six trous tels que 107 répartis circonférentiellement.

Par ailleurs, les rondelles de guidage arrière 13 et avant 14 sont centrées et guidées en rotation sur le moyeu cannelé 16 au moyen respectivement d'un palier arrière 17 et d'un palier avant 18. Chacun des paliers 17 et 18 peut former un palier lisse ou palier à roulements

Chacun des paliers 17 et 18 présente une forme en L. Le palier arrière 17 et le palier avant 18 sont disposés en appui contre une partie radiale 101 du moyeu 16. Le moyeu central 16 présente également une partie cylindrique 102 à partir de laquelle s'étend la partie radiale 101. La partie cylindrique 102 comporte sur une périphérie interne une denture complémentaire à celle de l'extrémité arrière de l'arbre d'entrée de la boîte de vitesses 2.

Chacune des rondelles de guidage arrière 13 et avant 14 comporte un rebord interne respectivement 19 et 20 définissant une surface d'appui pour le palier correspondant. Par ailleurs, chacun des paliers 17 et 18 présente une face radialement interne respectivement 21 et 22 qui coopère avec une surface externe annulaire respectivement 23 et 24 du moyeu cannelé 16 pour l'entrainement en rotation des paliers 17 et 18 par le moyeu 16. Le palier avant 18 forme une protubérance axiale 99 s'étendant vers l'avant.

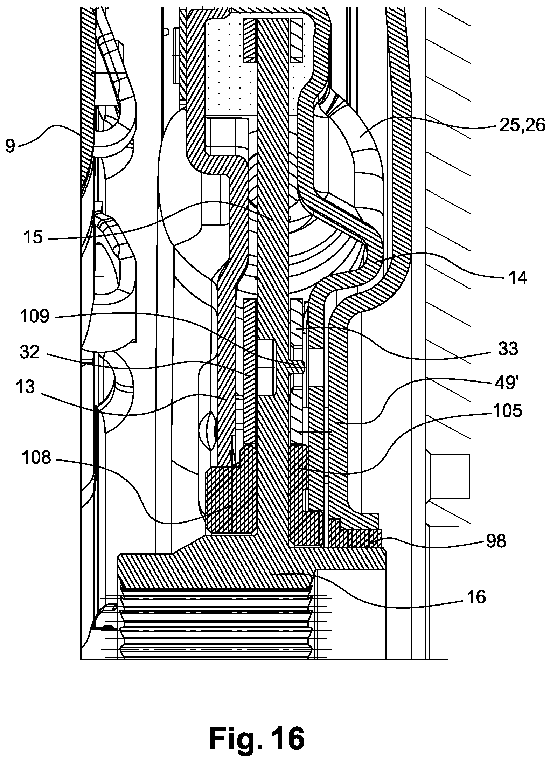

Au moins un des paliers 17 ou 18 pourrait être remplacé par un palier conique 105 tel qu'illustré en figure 16. Il en résulte un appui conique sur le moyeu 16 afin d'absorber les éventuels défauts d'alignement de l'arbre d'entrée de la boîte de vitesse et de l'arbre de sortie du moteur.

Le dispositif d'amortissement de torsion 4 comporte en outre une pluralité de groupes de deux organes élastiques 25,26 assurant un couplage entre les deux rondelles de guidage 13,14 et le voile 15. Les organes élastiques 25,26 sont ici des organes élastiques droits répartis circonférentiellement sur un même cercle autour de l'axe X. Les ressorts pourraient être courbés.

Chaque organe élastique peut comporter deux ressorts coaxiaux montés l'un dans l'autre. Dans l'exemple représenté, le dispositif d'amortissement de torsion 4 comporte trois groupes de deux organes élastiques droits.

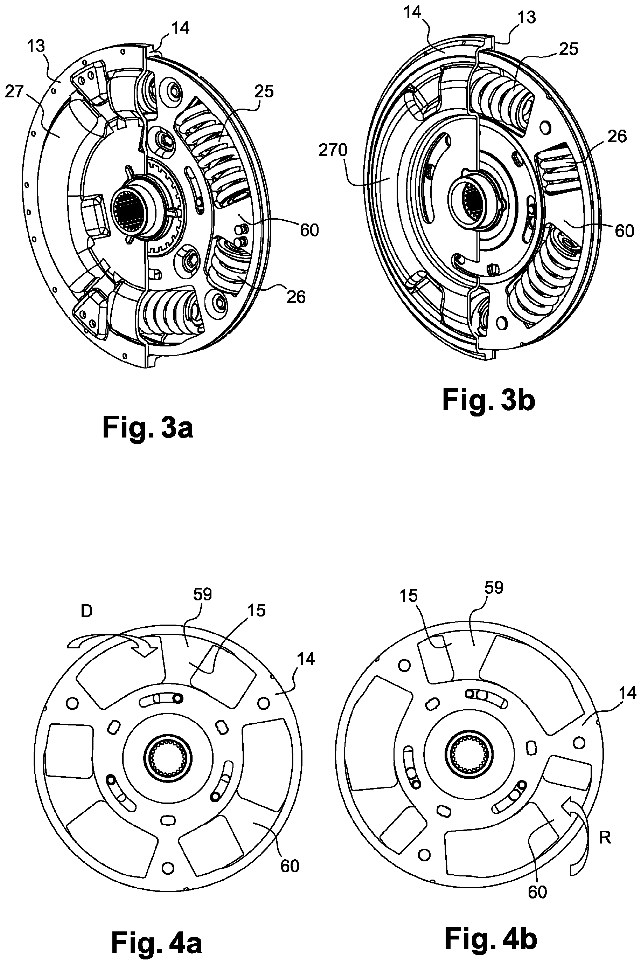

Figures 3a et 3b, les organes élastiques sont logés dans une chambre de logement définie par des portions annulaires embouties telles que 27 et 270 ménagées dans les rondelles de guidage respectivement 13 et 14 et s'étendant circonférentiellement.

Par ailleurs, chaque groupe d'organes élastiques s'étend circonférentiellement, d'une part, entre deux sièges d'appui (non représentés) portés par les rondelles de guidage 13 et 14 et, d'autre part, entre deux pattes d'appui 59,60 circonférentiellement consécutives du voile 15.

En effet, figure 4, le voile 15 comporte trois pattes d'appui 59,60 et 61. Chacune d'elles comporte deux faces d'appui 62,63 sensiblement planes servant à l'appui des extrémités des organes élastiques 25,26. Les pattes 59,60,61 du voile 15 peuvent comporter en outre des ergots de retenue (non représentés) qui s'étendent circonférentiellement de part et d'autre des pattes et permettent de retenir radialement les extrémités des organes élastiques 25,26.

Le voile 15 est monté fixe en rotation sur le moyeu cannelé 16. Le voile 15 présente une partie radialement interne 64 et une partie radialement externe 65 reliées entre elles par les pattes d'appui 59, 60, 61. La partie radialement externe 65 forme un anneau. Il est à noter que la partie radialement interne 64 du voile 15 se confond avec la partie radiale 101 du moyeu 16. Les pattes d'appui 59, 60, 61 s'étendent en formant une section angulaire s'élargissant à proximité de la partie radialement externe 65.

La partie radialement interne 64 et la partie radialement externe 65 délimitent, radialement entre deux pattes d'appui se suivant circonférentiellement, une fenêtre 70 pour accueillir deux organes élastiques 25, 26 d'un même groupe d'organes élastiques.

Dans un exemple non illustré, les pattes 59, 60 et 61 du voile 15 peuvent comporter également à leur extrémité radiale externe des éléments en saillie agencés pour coopérer en fin de course avec des surfaces de butée portées par l'une au moins des rondelles de guidage 13,14. Ainsi, la course angulaire des rondelles de guidage par rapport au voile 15 est limitée afin de protéger les organes élastique.

Figure 2, les organes élastiques de chaque groupe sont montés en série par l'intermédiaire d'au moins un organe de phasage 32, 33. Dans l'exemple, l'organe de phasage est formé de deux rondelles de phasage, une rondelle de phasage arrière 32 et une rondelle de phasage avant 33. Les deux rondelles de phasage 32,33 sont montées libre en rotation par rapport aux rondelles de guidage 13,14, d'une part, et par rapport au voile 15, d'autre part. Les deux rondelles de phasage 32,33 sont disposées de part et d'autre du voile 15. Les deux rondelles de phasage 32 et 33 sont coaxiales.

Les rondelles de phasage 32,33 sont chacune espacées axialement du deuxième voile 15 d'un jeu minimal de fonctionnement, par exemple de 0,1 à 1mm.

Les rondelles de phasage 32,33 sont centrées et guidées en rotation sur le moyeu cannelé 16 par le voile 15. Pour ce faire, la rondelle de phasage arrière 32 et la rondelle de phasage avant 33 comportent respectivement à leur périphérie interne, une face latérale avant 34 et une face latérale arrière 35 destinées à venir au regard, voir au contact respectivement d'une face latérale arrière 36 et d'une face latérale avant 37 du voile 15, à un endroit où se trouve la partie annulaire interne 64 du voile 15. Il est à noter que la protubérance axiale 99 du palier 18 sert de face d'appui axial pour la rondelle de phasage avant 33.

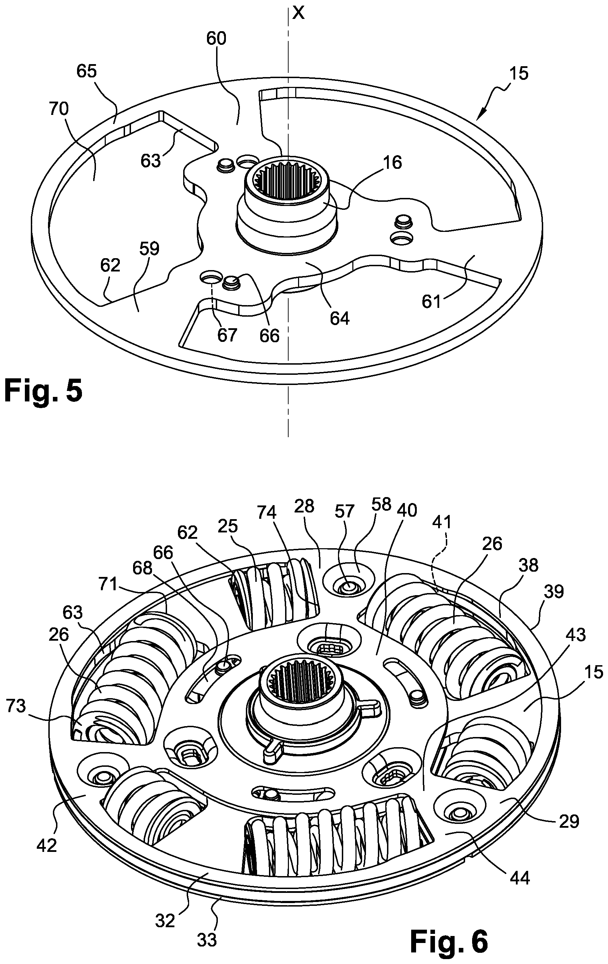

Figures 2 et 6, par ailleurs les rondelles de phasage 32,33 sont reliées entre elles par au moins un moyen de liaison 57. Les deux rondelles de phasage 32,33 sont chacune formées par une tôle. La rondelle de phasage arrière 32 présente, à l'endroit où est réalisée la liaison des deux rondelles de phasage 32,33 entre elles, une forme emboutie 58 permettant un rapprochement localisé des deux rondelles de phasage 32,33 entre elles. Ce rapprochement assure une tenue axiale et radiale des rondelles de phasages 32,33 entre elles et aussi vis-à-vis du voile 15.

Dans cet exemple, c'est la rondelle de phasage arrière 32 qui présente l'embouti 58 mais il pourrait être formé par la rondelle de phasage avant 33 seulement ou bien encore par les deux rondelles de phasage 32,33.

Dans l'exemple, la rondelle de phasage avant 33 est plane.

Figure 6 chacune des rondelles de phasage comporte des pattes radiales de phasage telles 28,29,42 qui sont chacune intercalées entre un premier organe élastique 25 et un deuxième organe élastique 26, de telle sorte que les deux organes élastiques 25,26 consécutifs d'un même groupe soient agencés en série. Les pattes radiales de phasage 28,29,42 comportent deux faces d'appui 73,74 sensiblement planes, formant un angle entre elles et servant à l'appui des extrémités des organes élastiques 25,26. Chaque patte radiale de phasage peut comporter en outre, à son bord radialement externe, deux ergots de retenue externes opposés (non représentés) s'étendant de part et d'autre de chaque patte radiale de phasage et permettant de retenir radialement et axialement les extrémités des organes élastiques.

L'organe de phasage 32,33 permet d'assurer une déformation des organes élastiques en phase les uns avec les autres de telle sorte que les efforts élastiques générés dans le dispositif d'amortissement de torsion 4 sont répartis circonférentiellement, de manière homogène.

Ainsi, en fonctionnement, chaque groupe comporte un premier organe élastique 25 prenant appui à une première extrémité contre un siège d'appui porté par les rondelles de guidage 13,14 et à une seconde extrémité contre une patte radiale 28,29,42 de phasage de l'organe de phasage 32,33 alors que le second organe élastique 26 prend appui à une première extrémité contre ladite patte radiale 28,29,42 de phasage de l'organe de phasage 32,33 et à une seconde extrémité contre une patte d'appui 59,60,61 du voile 15. Dès lors, un couple moteur est transmis des rondelles de guidage 13,14 vers le voile 15 par l'intermédiaire des organes élastiques 25,26.

Chacune des rondelles de phasage arrière 32 et avant 33 comporte une portion radialement externe 38,39 écartées l'une de l'autre, figure 6.

Chacune des rondelles de phasage arrière 32 et avant 33 comporte une portion radialement interne 40,41 écartées l'une de l'autre, figure 6.

Les pattes de phasage 28,29,42 s'étendent radialement depuis la portion radialement interne 40,41 de chacune des rondelles de phasage 32,33 vers la portion radialement externe 38,39 avec une extrémité proximale 43 proche de la portion radialement interne 40,41 plus fine qu'une extrémité distale 44 éloignée de la portion radialement interne 40,41. Les pattes de phasage 28,29,42 s'étendent sous la forme d'un secteur angulaire.

L'embouti 58 est réalisé au niveau de ces pattes de phasage, de préférence à un endroit proche de la portion radialement externe 38,39.

Circonférentiellement, entre deux pattes de phasage et entre la portion radialement interne et la portion radialement externe est délimitée une fenêtre 71 permettant de loger deux organes élastiques ou ressorts 25,26. Dans l'exemple illustré figure 6, le ressort 25 présente une longueur mesurée circonférentiellement plus petite que la longueur du deuxième ressort 26. Mais il pourrait aussi être envisagé le cas inverse, avec le ressort 25 de longueur plus grande que celle du deuxième ressort 26 (exemple non illustré).

Le voile 15 et les rondelles de phasage 32,33 comportent un même rayon. Ni le voile 15, ni les rondelles de phasages 32,33 ne dépassent les unes des autres. Ainsi, le dispositif d'amortissement selon l'invention est avantageusement peut encombrant radialement.

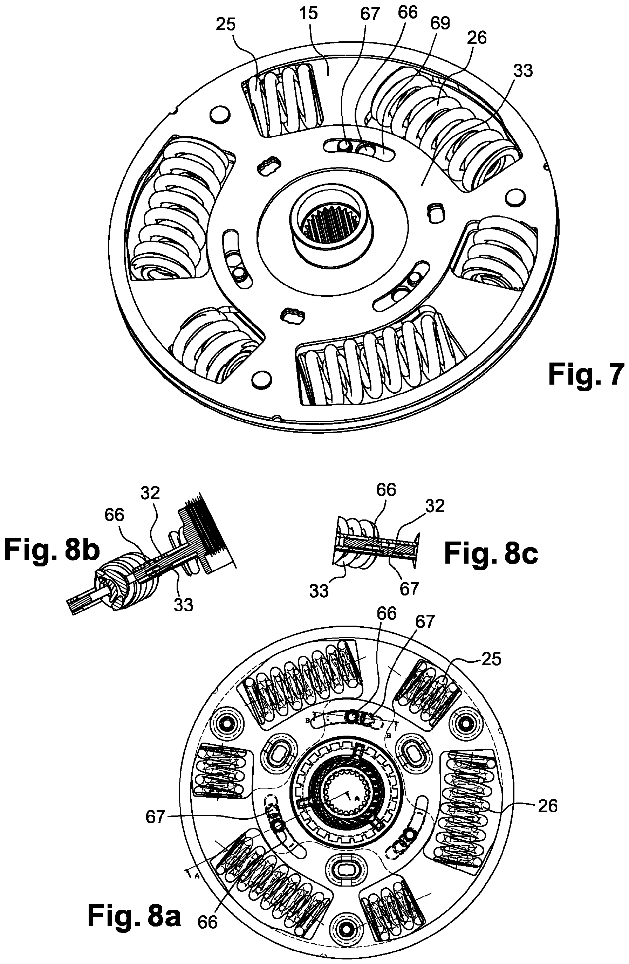

Dans la forme de réalisation représentée sur les figures 5 et 7, le voile 15 comporte au moins un plot axial arrière 66 et au moins un plot axial avant 67. Chacun de ces plots 66,67 forme une protubérance qui s'étend axialement par rapport à l'axe de rotation X du dispositif d'amortissement 4 et par rapport au plan dans lequel s'étend le voile 15.

La rondelle de phasage arrière 32 et la rondelle de phasage avant 33 comportent également chacune au moins un logement 68, 69 formé au travers de chacune des rondelles de phasage, figures 5 et 7. Le logement est de préférence de forme oblongue.

Le plot axial 66, 67 et le logement 68,69 correspondant sont agencés l'un par rapport à l'autre de telle sorte à ce que le plot axial s'insère au travers du logement. Les plots axiaux forment des moyens de butée qui limitent la rotation relative du voile 15 et des rondelles de phasage avant et arrière 32, 33 dans deux sens de rotation opposés, c'est-à-dire selon le sens direct (D) (figure 4a) ou rétro (R) (figure 4b).

Le plot axial 66, 67 est situé circonférentiellement entre deux pattes du voile. Plus précisément le plot axial 66,67 est situé radialement entre le moyeu cannelé 16 et la fenêtre 71 logeant deux organes élastiques 25, 26 et axialement entre la partie radialement interne 64 et la patte 59, 60, 61.

La rondelle de phasage arrière 32 et la rondelle de phasage avant 33 comportent chacune trois logement tels que 68 et respectivement 69 destinés chacun à recevoir un plot tel que 66 et 67 respectivement. Chacun des plots est destiné à venir en appui contre un bord du logement 68,69.

Le plot 66,67 peut être formé par un pion distinct du voile 15 (exemple non représenté) qui est inséré au travers du voile 15 par emmanchement en force ou fixé par soudure ou rivetage. Le pion peut alors être conçu de telle manière qu'au moins une extrémité dudit pion est sortante du voile 15. En variante, le pion est sortant des deux côtés du voile 15.

Figures 5, 7, 8a,8b,8c, le plot est réalisé par extrusion de la matière. Dans l'exemple de l'invention, le plot 66 est destiné à coopérer avec la rondelle de phasage arrière 32 et le plot 67 est destiné à coopérer avec la rondelle de phasage avant 33. Les plots 66 et 67 sont chacun formés sur un même cercle. Sur la figure 8a est illustré le dispositif d'amortissement et sur les figures 8b et 8c sont illustrées respectivement des coupes de dispositif d'amortissement selon une première coupe A et selon une deuxième coupe B en passant respectivement par le plot 66 et par les deux plots 66 et 67.

En variante non illustrée, les deux plots 66 et 67 pourraient être radialement alignés.

La rondelle de phasage arrière 32 et la rondelle de phasage avant 33 sont reliées entre elles également par l'intermédiaire d'un organe de liaison 52 formant une entretoise de liaison 52.

Selon un mode de réalisation de l'invention, l'entretoise de liaison 52 est disposée sur un même cercle que celui sur lequel sont formés les plots 66,67.

Figure 2, le dispositif d'amortissement 4 comporte également un amortisseur pendulaire 48 comprenant un organe de support 49 et une pluralité de masselottes pendulaires 50 circonférentiellement réparties sur l'organe de support 49. L'organe de support 49 de l'amortisseur pendulaire 48 forme un disque qui comporte une première partie qui s'étend radialement et une deuxième partie qui s'étend axialement. La deuxièeme partie est destinée à venir en appui contre le palier 18. Dans l'exemple la deuxième partie de l'organe de support 49 s'étend vers l'avant.

L'organe de support 49 présente des orifices de réception 51 permettant le passage d'organe de liaison 52, tels que des rivets, permettant de solidariser l'organe de support 49 aux rondelles de phasage arrière 32 et avant 33. La fixation de l'organe de support 49 aux rondelles de phasage arrière 32 et avant 33 est réalisée au travers d'un orifice 53 formé au travers de la rondelle de guidage avant 14. Selon un mode de réalisation de l'invention, l'orifice 53 est de forme oblongue et s'étend circonférentiellement sur une longueur définie de telle sorte à ce que l'organe de liaison 52 ne vient pas au contact d'un bord dudit orifice 53, quelque soit les conditions de fonctionnement de l'ensemble de transmission. Le trou 107 formé au travers de la rondelle de guidage arrière 13 sert ainsi que phasage de cet organe de liaison 52 au moment de l'assemblage du dispositif 4.

Ainsi, l'organe de liaison 52 relie les deux rondelles de phasage 32,33 entre elles et relie l'amortisseur pendulaire 48 aux deux rondelles de phasage 32,33. Dans un mode de réalisation de l'invention, l'organe de liaison 52 est fixé par rivetage sur l'organe de support de pendule 49.

Dans l'exemple, les logements 68 et 69 et les orifices 51 et 53 s'étendent sur un cercle de même rayon.

L'organe de fixation 52 forme également une entretoise entre les rondelles de phasage 32,33 et l'organe de support 49.

En outre, l'organe de support 49 est décalé axialement vers l'avant et s'étend entre la rondelle de guidage avant 14 et le volant d'inertie 3. Les masselottes pendulaires 50 sont montées à une extrémité externe de l'organe de support 49. Dans l'exemple figure 2, les masselottes pendulaire 50 sont implantées radialement à l'extérieur des organes élastiques. Ainsi, les masselottes pendulaires 50 peuvent être implantées à une distance radiale de l'axe X relativement importante ce qui a pour effet de conférer à l'amortisseur pendulaire 48 des performances de filtration optimales.

Les masselottes 50 sont aptes à osciller par rapport à l'organe de support 49 dans un plan orthogonal à l'axe de rotation X, en réaction aux irrégularités de rotation. Chaque masselotte 50 comporte deux flancs 54, 55 qui s'étendent axialement de part et d'autre de l'organe de support 49 et sont reliées axialement l'un à l'autre par l'intermédiaire de deux entretoises de liaison telles que 56. Le fonctionnement de telles masselottes est bien connu en soi et ne sera pas plus décrit ici. D'autres architectures d'amortisseur pendulaire 48 sont également envisageables.

Les logements 68 et 69 formés au travers respectivement de la rondelle de phasage arrière 32 et de la rondelle de phasage avant 33 sont localisés sur un même cercle que celui le long du quel est formé l'orifice 53. Dans un mode de réalisation de l'invention, l'orifice 53 s'étendant sur un arc de cercle plus grand que celui le long duquel s'étendent les logements 68 et 69.

Dans l'exemple représenté figure 2, les rondelles de guidage arrière 13 et avant 14 définissent une chambre étanche de logement 45 des organes élastiques 25,26 qui est remplie d'un agent de lubrification, telle que de la graisse.

Afin de garantir l'étanchéité du logement 45, la fixation des rondelles de guidage arrière 13 et avant 14 peut être réalisée par soudure étanche. En effet, les deux rondelles de guidage arrière 13 et avant 14 sont solidaires en rotation l'une par rapport à l'autre. Les rondelles de guidage 13 et 14 sont reliées continument l'une avec l'autre sur tout leur pourtour périphérique extérieur. D'autres modes de réalisation sont possibles, par exemple les rondelles de guidage 13 et 14 peuvent être assemblées par vissage avec utilisation d'un joint, ou bien par rivetage avec ou sans joint.

Dans un mode de réalisation non représenté, un anneau formant entretoise pourrait être inséré, entre les deux rondelles de guidage au niveau de leur portion radialement externe par exemple, afin de maintenir l'écartement axial requis entre les rondelles de guidage.

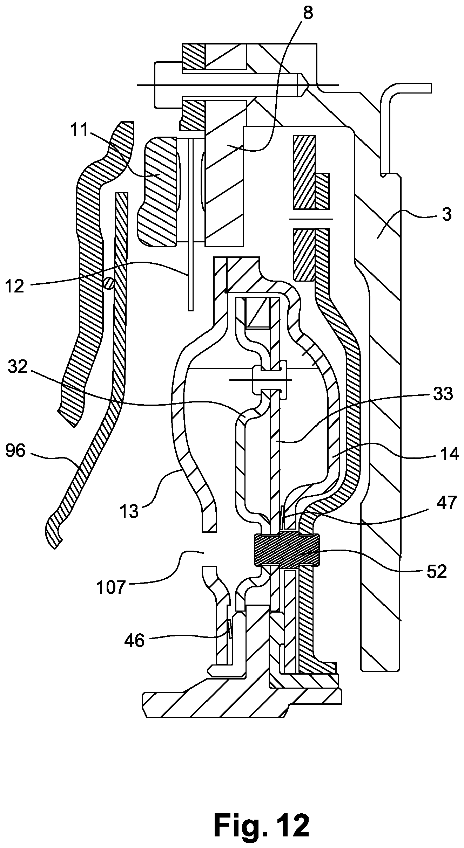

De plus, le dispositif d'amortissement de torsion 4 est équipé de moyens d'étanchéité 46,47 figure 12. Par soucis de clarté, tous les éléments en commun avec ceux de la figure 2 sont référencés avec les mêmes numéros. La figure 12 est une représentation simplifiée de la figure 2. Ces moyens d'étanchéité 46,47 comportent une première rondelle d'étanchéité 46 élastiquement déformable, placée entre le voile 15 et la rondelle de guidage arrière 13, assurant l'étanchéité entre le voile 15 et la rondelle de guidage arrière 13. Ces moyens d'étanchéité comportent également une seconde rondelle d'étanchéité 47, placée entre la rondelle de phasage avant 33 et la rondelle de guidage avant 14, assurant l'étanchéité entre la rondelle de phasage avant 33 et la rondelle de guidage avant 14.

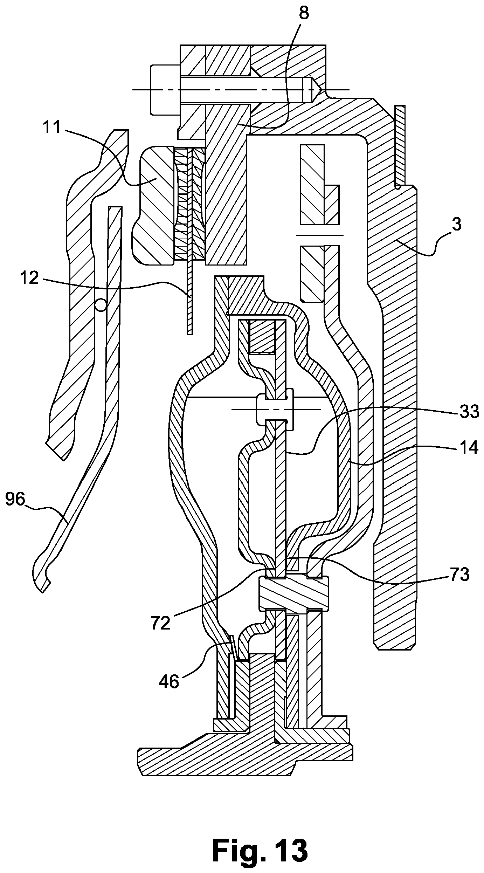

D'autres moyens d'étanchéité peuvent être prévus. Notamment figure 13 est représenté une variante du mode de réalisation représenté en figure 12 dans laquelle est représentée la position de la rondelle de phasage avant 33 par rapport à la rondelle de guidage avant 14. Comme pour la figure 12, les éléments communs aux éléments décrits pour la figure 2 comportent les mêmes références sur la figure 13.

La rondelle de phasage avant 33 forme une première partie plane 72 accolée contre une deuxième partie plane 73 formée par la rondelle de guidage avant 14. L'accolement plan- plan de la rondelle de phasage avant 33 sur la rondelle de guidage avant 14 permet d'assurer une étanchéité entre ces deux éléments. Cette accolement plan-plan de la rondelle de guidage avant 33 et de la rondelle de guidage avant 14 peut être ou non associé à la présence de la seconde rondelle d'étanchéité 47.

Le dispositif tel qu'illustré en figure 13 se différentie du dispositif tel qu'illustré en figure 12 par l'absence de la rondelle d'étanchéité 47 entre la rondelle de guidage avant 14 et la rondelle de phasage avant 33.

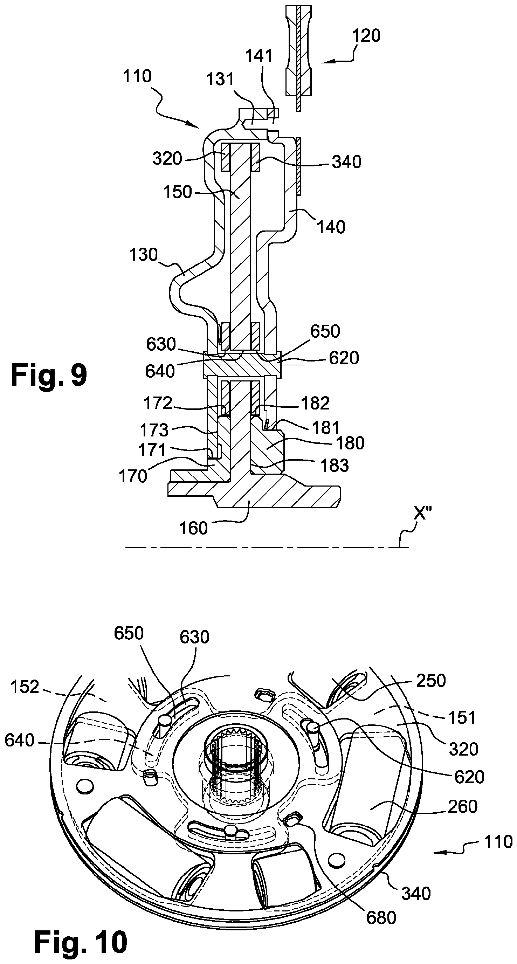

Figures 9 et 10 est illustré un autre exemple dans lequel une rondelle de guidages avant 130 et une rondelle de guidage arrière 140 sont reliées entre elles par l'intermédiaire d'au moins une entretoise de liaison 620. Plusieurs entretoises de liaison telle que 620 peuvent être disposées circonférentiellement. Dans l'exemple illustré, 3 entretoises de liaison telle que 620 sont prévues.

Cette entretoise de liaison 620 permet de relier les deux rondelles de guidage entre elles. Cette entretoise de liaison 620 forme également une butée de fin de course de la rondelle de guidage avant 130 et de la rondelle de guidage arrière 140 par rapport à la rondelle de phasage avant 320, à la rondelle de phasage arrière 330 et par rapport au voile 150. L'entretoise de liaison 620 forme une butée pouvant être qualifiée de « télescopique » puisque lors de la rotation des deux rondelles de guidage 130 et 140, l'entretoise de liaison 620 est apte à entrer en contact avec les rondelles de phasage 320 et 330 puis avec le voile 150.

Pour cela, la rondelle de phasage avant 320, la rondelle de phasage arrière 340 et le voile 150 comportent des logements respectivement 630, 640, 650 configurés pour laisser passer l'entretoise de liaison 620, figure 10. Les logements 630,640 et 650 sont également configurés de telle manière que l'entretoise de liaison est apte à venir en butée contre un bord du logement de la rondelle de phasage avant 320 et d'un autre bord correspondant de la rondelle de phasage arrière 340, puis vient en appui contre un bord du logement du voile 150 dans un second temps. L'entretoise de liaison 620 est localisée proche de l'axe X" du dispositif.

Un amortisseur pendulaire (non illustré) peut également être prévu et être connecté aux rondelles de phasage 320 et 340 au moyen de l'entretoise de liaison 620 similaire à l'entretoise de liaison 52 telle que décrite précédemment. Ou bien il peut être prévu une autre entretoise de liaison distincte de celle servant de butée. Cette autre entretoise traverserait alors la rondelle de guidage 140. L'emplacement de cette autre entretoise de liaison est représenté par un orifice 680 formé au travers de chacune des rondelles de phasage 320 et 340. Cet orifice 680 est situé sur un même cercle que celui sur lequel est localisée l'entretoise de liaison 620. Cet orifice 680 est localisé entre deux pattes 151 et 152 du voile 150. Mais en variante non illustrée, le voile 150 pourrait également comporter des logements oblongs afin d'autoriser le passage de l'autre entretoise de liaison et le débattement des rondelles de phasages 320 et 340.

Dans l'exemple tel qu'illustré en figures 9 et 10, le voile 150 est connecté à un moyeu 160 apte à être lié en rotation à un arbre d'entrée d'une boîte de vitesses. Dans cet exemple, le voile 150 est d'une seule pièce avec le moyeu 160 mais pourrait être formé d'une pièce distincte du moyeu 160. Entre la rondelle de guidage avant 130 et le moyeu 160 est disposé un palier avant 170. Entre la rondelle de guidage arrière 140 et le moyeu 160 est disposé un palier arrière 180. Entre les rondelles de phasage avant 320 et le moyeu 160 est disposé le palier avant 170. Entre la rondelle de phasage arrière 330 et le même moyeu 160 est disposé le palier arrière 180. Le palier avant 170 et le palier arrière 180 présentent chacun une forme en L avec une première face d'appui axiale respectivement 171,181 et une deuxième face d'appui axiale respectivement 172,182. La première face d'appui des paliers 170 et 180 est apte à recevoir une extrémité radialement interne respectivement de la rondelle de guidage avant 130 et de la rondelle de guidage arrière 140. La deuxième face d'appui des paliers 170 et 180 est apte à recevoir une extrémité radialement interne de la rondelle de phasage avant 320 et de la rondelle de phasage arrière 330.

Le palier avant 170 et le palier arrière 180 présentent une troisième face d'appui radiale respectivement 173 et 183 destinée à venir en appui contre une face correspondante respectivement de la rondelle de guidage avant 130 et de la rondelle de guidage arrière 140.

Les rondelles de guidage 130,140 peuvent former l'élément d'entrée de couple en mode dit « direct », le voile 150 formant alors l'élément de sortie de couple. Egalement, les rondelles de guidage 130,140 peuvent former l'élément de sortie de couple en mode dit « rétro », le voile 150 formant alors l'élément d'entrée de couple. La rondelle de guidage arrière 140 est reliée à un disque de friction 120.

Les rondelles de guidage 130,140 sont également reliées entre elles par au moins un moyen de fixation (non représenté). Les rondelles de guidage 130,140 comportent pour cela des orifices de passages 131 et 141 du moyen de fixation. Dans un exemple, le moyen de fixation peut être une vis que l'on peut venir insérer au travers des orifices de passages 131 et 141. Dans l'exemple figure 9, les orifices de passage 131 et 141 sont localisé à la périphérie radialement extérieure des rondelles de guidage tandis que les logements 630,640 et 650 recevant l'entretoise de liaison 620 sont destinés à être localisés à la périphérie radialement interne des rondelles de guidages 130,140.

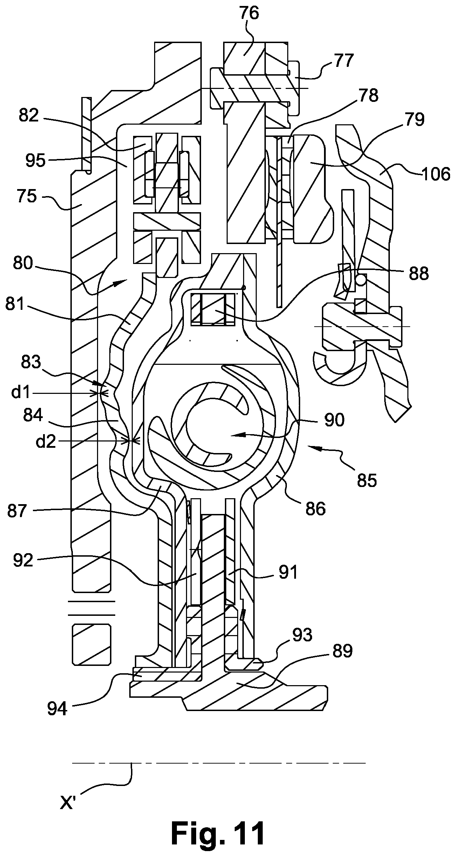

Figure 11, est représenté un ensemble comprenant un volant moteur ou volant d'inertie 75 apte à être relié à l'arbre de sortie du moteur, un plateau de réaction 76 monté fixe en rotation au volant d'inertie 75 au moins de rivets ou de vis non représentés. L'ensemble comprend également un disque de friction 78 apte à être pincé entre le plateau de réaction 76 et un plateau de pression 79 pour permettre de coupler en rotation le volant d'inertie 75 à la boîte de vitesses. Le plateau de réaction 76, le disque de friction 78 et le plateau de pression 79 font partis d'un embrayage à disque. Le couvercle 106 est fixé au plateau de réaction 76 au moyen de rivet de fixation 77.

L'ensemble tel qu'illustré en figure 11 comporte également un amortisseur pendulaire 80 destiné à être couplé à l'arbre d'entrée de la boîte de vitesses. L'amortisseur pendulaire 80 comporte un organe de support 81 et des masselottes pendulaires 82 montées mobiles sur l'organe de support 81. L'amortisseur pendulaire 80 est situé entre le volant d'inertie 75 et l'arbre d'entrée de la boîte de vitesses. L'amortisseur pendulaire 80 comporte des moyens d'anti-basculement 83 qui sont conçus de telle manière que l'organe de support 81 et le volant d'inertie 75 coopèrent l'un avec l'autre pour maintenir axialement en position l'organe de support 81 par rapport au volant d'inertie 75.

L'organe de support 81 présente des formes ondulées 84 aptes à coopérer avec le volant d'inertie 75 en cas de basculement de l'organe de support 81.

Les formes ondulées 84 forment des vagues qui s'étendent au moins partiellement circonférentiellement. Ces formes et/ou le volant d'inertie 75 peuvent être recouvertes d'une substance permettant un glissement aisé sans frottement de ces formes contre le volant d'inertie 75.

En variante, ces formes 84 peuvent être remplacées au moins partiellement par des pions (non représentés). En variante, les formes ou les pions pourraient être portés par le volant d'inertie 75.

Les formes 84 sont situées à une distance de l'axe de rotation X' dudit ensemble de telle manière à ce qu'elles sont susceptibles de venir au contact du volant d'inertie 75 ou de l'organe de support 81 en cas de basculement de l'organe de support 81 pour empêcher tout contact des masselottes pendulaire 82 avec le volant d'inertie 75 et/ou le plateau de réaction 76. Dans l'exemple illustré figure 11, en position de repos, l'organe de support 81 est écartée axialement du volant d'inertie 75 d'une distance d1. Cette distance est mesurée le long d'un axe qui est parallèle à l'axe de rotation X'. Pour empêcher tout contact avec le plateau de réaction 76, l'organe de support 81 est aussi écarté en position de repos d'un amortisseur de torsion 85 couplé au disque de friction 78 d'une distance d2. La distance d2 est également mesurée le long d'un axe parallèle à l'axe de rotation X'.

L'ensemble comporte également un amortisseur de torsion 85 couplé au disque de friction 78. L'amortisseur de torsion 85 comprend une rondelle de guidage arrière 86 et une rondelle de guidage avant 87. La rondelle de guidage arrière 86 et la rondelle de guidage avant 87 sont couplées au disque de friction 78. L'amortisseur de torsion 85 comporte également un voile 88 couplé en rotation à un moyeu central 89 qui forme un pièce monobloc avec le voile 88. Le moyeu central 89 est apte à être couplé à l'arbre d'entrée de la boîte de vitesses.

Au moins un groupe d'organes élastiques 90 est monté entre les rondelles de guidage 86 et 87 et le voile 88. Ces organes élastiques 90 agissent à l'encontre de la rotation du volant d'inertie 75/du plateau de réaction 76 par rapport au voile 88/moyeu 89.

Les moyens d'anti-basculement 83 et le groupe d'organes élastiques 90 sont situés de préférence sur une même circonférence.

L'organe de support 81 présente des formes ondulées aptes à coopérer avec la rondelle de guidage avant 87 en cas de basculement dudit organe de support 81. En variante non représentée, ces formes ondulées peuvent également être présente sur la rondelle de guidage avant 87.

Comme précédemment, les organes élastiques 90 du groupe sont agencés en série par l'intermédiaire d'une rondelle de phasage arrière 91 et d'une rondelle de phasage avant 92 qui sont montées libres en rotation par rapport aux rondelles de guidage 86,87 et par rapport au voile 88 de façon à ce que les organes élastiques de chaque groupe se déforment en phase les uns avec les autres.

La rondelle de phasage arrière 91 et la rondelle de phasage avant 92 sont reliées fixement ensemble.

Un palier arrière 93 et un palier avant 94 sont disposés de part et d'autre du voile 88. L'organe de support 81 est couplé indirectement à l'arbre d'entrée de couple de la boîte de vitesses par fixation de l'organe de support 81 sur le palier avant 94. Chacun de ces paliers 93,94 sont couplés en rotation au moyeu 89.

De préférence, les masselottes pendulaires 82 sont disposées radialement à l'extérieur de l'amortisseur de torsion 85.

Le volant d'inertie 75 et le plateau de réaction 76 forment un logement 95 à l'intérieur duquel sont insérées les masselottes pendulaires 82.

Des moyens de frottement peuvent être prévus fixés sur le volant d'inertie 75, ou sur la tôle de l'organe de support 84 de pendule, ou sur la rondelle de guidage avant 87.

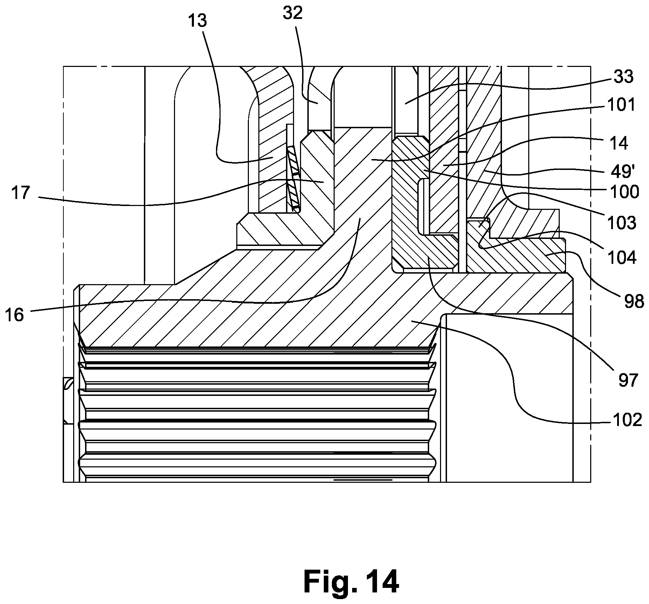

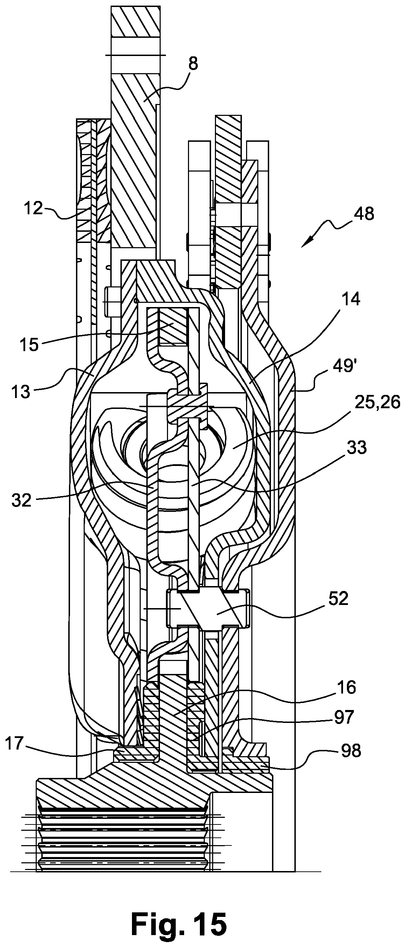

En variante figures 14 et 15, est illustré un palier 17 identique à celui illustré en figure 2 et au autre palier formé de deux pièces distinctes 97 et 98. Chacune des pièces distinctes peut former un palier lisse ou palier à roulements. Les éléments en commun illustrés en figure 14 et en figure 2 comportent les mêmes numéros de référence. La première pièce 97 est fixée en rotation par rapport au moyeu 16 tandis que la deuxième pièce 98 forme une pièce cylindrique montée accolée au moyeu 16. La première pièce 97 présente aussi une protubérance axiale 100 s'étendant vers l'avant destinée à servir de face d'appui axiale pour la rondelle de phasage avant 33. La première pièce 97 sert à centrer la rondelle de guidage avant 14. La deuxième pièce 98 permet de centrer l'organe de support de pendule 49'. La deuxième pièce 98 forme une butée axiale 103 et la périphérie radialement interne du support de pendule 49' s'étend axialement et comporte une surface complémentaire 104 à la butée axiale 103. La butée axiale 103 est configurée de telle manière à empêcher le déplacement axial du support de pendule 49' en direction de la partie radiale 101 du moyeu 16.

Figure 16, est illustré un dispositif d'amortissement comportant le palier conique 105 servant de support à la rondelle de phasage avant 33. La figure 16 illustre également un plot axial 109 porté par le voile 15 et servant de butée aux rondelles de phasage arrière 32 et avant 33. Un autre palier 108 est également représenté et servant au support de la rondelle de guidage arrière 13. Le palier 98 est positionné entre le moyeu 16 et l'organe de support 49.

Le montage d'un ensemble de transmission comprenant un dispositif d'amortissement tel que précédemment décrit est réalisé de la manière suivante. Les rondelles de phasage avant 32 et arrière 33 sont assemblées de part et d'autre du voile 15. Les organes élastiques sont ensuite insérés à l'intérieur de fenêtres 71 et 70 respectivement des rondelles de phasages 32,33 et du voile 15. La rondelle de guidage avant 14 est placée contre la rondelle de phasage avant 33. La rondelle de guidage arrière 13 est placée contre la rondelle de phasage arrière 32. Puis, l'organe de liaison 52 est inséré au travers de la rondelle de guidage arrière 13. L'organe de support de pendule 49 est placé sur la rondelle de guidage avant 14. L'organe de liaison 52 est alors fixé sur l'organe de support de pendule 49.

Plus précisément, avant le montage de l'organe de support 49 sur la rondelle de guidage avant 14, il est prévu de fixer le disque de friction 12 sur la rondelle de guidage arrière 13, et de placer le plateau de réaction 8 sur une première face du disque de friction 12 située en regard de l'amortisseur pendulaire 48. Puis le plateau de pression 11 est placé en regard d'une deuxième face du disque de friction 12, ladite deuxième face étant opposée à la première face. Le mécanisme d'embrayage formé par le couvercle 9 et le diaphragme 96 est ensuite relié au plateau de réaction 8.

Des sous-ensembles sont d'abord formés séparément les uns des autres. L'amortisseur pendulaire 48 est assemblé par montage des masselottes pendulaires sur l'organe de support 49. Le mécanisme d'embrayage 9,96 est également assemblé. Et enfin les rondelles de guidage arrière 13 et avant 14, les rondelles de phasage arrière 32 et avant 33 ainsi que le voile 15 et les ressorts 25 et 26 sont montés pour former un sous-ensemble en forme de disque creux auquel on fixe le disque de friction 12. Ensuite on assemble le mécanisme d'embrayage 9,96, le plateau de réaction 8 et le sous-ensemble en forme de disque. On insère l'organe de liaison 52 au travers la rondelle de guidage arrière 13. On assemble l'amortisseur pendulaire 48 sur la rondelle de guidage avant 14 en rivetant l'organe de liaison 52. Le trou 107 est ensuite rebouché à l'aide d'un bouchon étanche (non représenté).

Parallèlement le volant d'inertie 6 est couplé au vilebrequin d'un moteur. Puis le sous ensemble formé par le mécanisme d'embrayage 9,96, le plateau de réaction 8, le plateau de pression 11, le disque d'embrayage 12 et le dispositif d'amortissement 4 est monté sur le volant d'inertie 6.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention. En particulier, un embrayage ou un convertisseur de couple peut être disposé dans la chaîne de transmission entre la sortie de l'amortisseur à organes élastiques et l'arbre d'entrée de la boîte de vitesses.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Dispositif d'amortissement de torsion (4), pour un véhicule automobile, comportant :
- un premier élément mobile (13,14) apte à recevoir un couple d'entrée et un second élément mobile (15,16) apte à transmettre un couple de sortie, le premier élément et le deuxième élément étant mobiles en rotation autour d'un axe X, coaxiaux,
- un moyeu central couplé en rotation au deuxième élément et apte à être relié à un arbre d'entrée d'une boite de vitesses,
- au moins un groupe d'organes élastiques (25,26) montés entre le premier élément et le second élément et agissant à l'encontre de la rotation de premier élément et du second élément l'un par rapport à l'autre,
- un organe de phasage (32,33), mobile en rotation autour de l'axe X et formé par une première partie (32) et une deuxième partie (33), pour agencer les organes élastiques de ce groupe en série de façon à ce que les organes élastiques de chaque groupe se déforment en phase les uns avec les autres,
- un amortisseur pendulaire (48) comprenant un organe de support de pendule (49') apte à se déplacer en rotation autour de l'axe de rotation sur lequel est monté mobile au moins une masselotte (54,55), l'organe de support de pendule étant lié en rotation à l'organe de phasage, l'organe de phasage étant centré sur le moyeu central par l'intermédiaire de l'organe de support de pendule,
le dispositif comportant en outre un palier (97,98) qui est monté entre le support de pendule et le moyeu central, le moyeu central comportant une partie radiale (101) et une partie cylindrique (102) à partir de laquelle s'étend la partie radiale, **caractérisé en ce que** le palier (97,98) est formé par une première pièce (97) et une deuxième pièce (98) distinctes l'une de l'autre, la première pièce étant proche de la partie radiale du moyeu et la deuxième pièce étant éloignée de la partie radiale du même moyeu.

2. Dispositif selon la revendication 1, dans lequel le palier est un palier lisse, un palier à roulements ou un palier conique (105).

3. Dispositif selon la revendication 1 ou 2, dans lequel l'élément d'entrée est formé par une première rondelle de guidage (13) et par une deuxième rondelle de guidage (14) reliées entre elles, la première pièce servant au centrage d'une des rondelles de guidage et la deuxième pièce du palier servant au centrage du support de pendule.

4. Dispositif selon l'une des revendications 1 à 3, dans lequel la deuxième pièce forme une butée axiale (103) et la périphérie radialement interne du support de pendule comporte une surface complémentaire (104) à la butée axiale, la butée axiale étant configurée de telle manière à empêcher le déplacement axiale du support de pendule en direction de la partie radiale du moyeu.

5. Dispositif selon l'une des revendications 1 à 4, dans lequel le premier palier comporte une protubérance axiale (100) servant de surface d'appui axiale pour la deuxième rondelle de guidage.

6. Composant pour système de transmission d'un véhicule automobile, le composant étant notamment un double volant amortisseur, un convertisseur de couple hydrodynamique ou un disque de friction, comprenant un dispositif d'amortissement (4) selon l'une quelconque des revendications 1 à 5.

7. Ensemble de transmission pour véhicule automobile, destiné à être disposé entre un moteur thermique (1) équipé d'un vilebrequin et une boîte de vitesses (2) équipée d'un arbre d'entrée, ledit ensemble comprenant :
- une machine électrique (500) comportant un stator (501) et un rotor (502) mobile en rotation autour d'un axe X ;
- un embrayage (330) agencé pour accoupler ou désaccoupler en rotation le vilebrequin du moteur et le rotor ;
- un dispositif d'amortissement de torsion (4) selon l'une des revendications 1 à 5, le dispositif d'amortissement étant agencé pour transmettre un couple et amortir les acyclismes de rotation entre le rotor et l'arbre d'entrée de la boîte de vitesses.

## Patentansprüche

1. Torsionsdämpfungsvorrichtung (4) für ein Kraftfahrzeug, die aufweist:
- ein erstes bewegliches Element (13, 14), das ein Eingangsdrehmoment empfangen kann, und ein zweites bewegliches Element (15, 16), das ein Ausgangsdrehmoment übertragen kann, wobei das erste Element und das zweite Element koaxial um eine Achse X drehbeweglich sind,
- eine Mittelnabe, die in Drehung mit dem zweiten Element gekoppelt ist und mit einer Antriebswelle eines Schaltgetriebes verbunden werden kann,
- mindestens eine Gruppe elastischer Organe (25, 26), die zwischen dem ersten Element und dem zweiten Element montiert sind und gegen die Drehung des ersten Elements und des zweiten Elements zueinander wirken,
- ein Phaseneinstellorgan (32, 33), das um die Achse X drehbeweglich ist und von einem ersten Teil (32) und einem zweiten Teil (33) gebildet wird, um die elastischen Organe dieser Gruppe in Reihe zu schalten, damit die elastischen Organe jeder Gruppe sich in Phase miteinander verformen,
- einen Pendeldämpfer (48), der ein Pendelträgerorgan (49') enthält, das sich in Drehung um die Drehachse verschieben kann, auf den mindestens ein Fliehgewicht (54, 55) beweglich montiert ist, wobei das Pendelträgerorgan in Drehung mit dem Phaseneinstellorgan verbunden ist, wobei das Phaseneinstellorgan mittels des Pendelträgerorgans auf die Mittelnabe zentriert wird,
wobei die Vorrichtung außerdem ein Lager (97, 98) aufweist, das zwischen den Pendelträger und die Mittelnabe montiert ist, wobei die Mittelnabe einen radialen Teil (101) und einen zylindrischen Teil (102) aufweist, von dem ausgehend sich der radiale Teil erstreckt, **dadurch gekennzeichnet, dass** das Lager (97, 98) von einem ersten Bauteil (97) und einem zweiten Bauteil (98) gebildet wird, die sich voneinander unterscheiden, wobei das erste Bauteil nahe dem radialen Teil der Nabe und das zweite Bauteil vom radialen Teil der gleichen Nabe entfernt ist.

2. Vorrichtung nach Anspruch 1, wobei das Lager ein Gleitlager, ein Wälzlager oder ein Kegellager (105) ist.

3. Vorrichtung nach Anspruch 1 oder 2, wobei das Eingangselement von einer ersten Führungsscheibe (13) und von einer zweiten Führungsscheibe (14) gebildet wird, die miteinander verbunden sind, wobei das erste Bauteil zur Zentrierung einer der Führungsscheiben und das zweite Bauteil des Lagers zur Zentrierung des Pendelträgers dient.

4. Vorrichtung nach einem der Ansprüche 1 ä 3, wobei das zweite Bauteil einen axialen Anschlag (103) bildet und der radial innere Umfang des Pendelträgers eine zum axialen Anschlag komplementäre Fläche (104) aufweist, wobei der axiale Anschlag so konfiguriert ist, dass er die axiale Verschiebung des Pendelträgers in Richtung des radialen Teils der Nabe verhindert.

5. Vorrichtung nach einem der Ansprüche 1 bis 4, wobei das erste Lager einen axialen Vorsprung (100) aufweist, der als axiale Auflagefläche für die zweite Führungsscheibe dient.

6. Bauelement für ein Getriebesystem eines Kraftfahrzeugs, wobei das Bauelement insbesondere ein Zweimassenschwungrad, ein hydrodynamischer Drehmomentwandler oder eine Reibscheibe ist, das eine Dämpfungsvorrichtung (4) nach einem der Ansprüche 1 bis 5 enthält.

7. Getriebeeinheit für ein Kraftfahrzeug, die dazu bestimmt ist, zwischen einem mit einer Kurbelwelle ausgestatteten Wärmekraftmotor (1) und einem mit einer Antriebswelle ausgestatteten Schaltgetriebe (2) angeordnet zu werden, wobei die Einheit enthält:
- eine elektrische Maschine (500), die einen Stator (501) und einen Rotor (502) aufweist, der in Drehung um eine Achse X beweglich ist;
- eine Kupplung (330), die eingerichtet ist, um die Kurbelwelle des Motors und den Rotor in Drehung zu koppeln oder zu entkoppeln;
- eine Torsionsdämpfungsvorrichtung (4) nach einem der Ansprüche 1 bis 5, wobei die Dämpfungsvorrichtung eingerichtet ist, um ein Drehmoment zu übertragen und die Drehungleichförmigkeiten zwischen dem Rotor und der Antriebswelle des Schaltgetriebes zu dämpfen.

## Claims

1. Torsion damping device (4) for a motor vehicle, comprising:
- a first mobile element (13, 14) that is able to receive an input torque and a second mobile element (15, 16) that is able to transmit an output torque, the first element and the second element being mobile in rotation about an axis X and coaxial,
- a central hub that is coupled in rotation with the second element and is able to be connected to an input shaft of a gearbox,
- at least one group of elastic members (25, 26) that are mounted between the first element and the second element and act counter to the rotation of the first element and of the second element with respect to one another,
- a phasing member (32, 33) that is mobile in rotation about the axis X and consists of a first part (32) and a second part (33), in order to arrange the elastic members of this group in series such that the elastic members of each group deform in phase with one another,
- a pendulum damper (48) comprising a pendulum support member (49') that is able to move in rotation about the axis of rotation on which at least one mass (54, 55) is mounted so as to be able to move, the pendulum support member being linked in rotation with the phasing member, the phasing member being centred on the central hub via the intermediary of the pendulum support member,
the device further comprising a bearing (97, 98) which is mounted between the pendulum support and the central hub, the central hub comprising a radial portion (101) and a cylindrical portion (102) from which the radial part extends,
**characterized in that**
the bearing (97, 98) consists of a first part (97) and a second part (98) that are distinct from one another, the first part being close to the radial portion of the hub and the second part being remote from the radial portion of this same hub.

2. Device according to Claim 1, in which the bearing is a plain bearing, a rolling-element bearing or a conical bearing (105).

3. Device according to Claim 1 or 2, in which the input element consists of a first guiding washer (13) and a second guiding washer (14) that are connected to one another, the first part serving for centring one of the guiding washers and the second part of the bearing serving for centring the pendulum support.

4. Device according to one of Claims 1 to 3, in which the second part forms an axial stop (103) and the radially inner periphery of the pendulum support comprises a matching surface (104) for the axial stop, the axial stop being configured so as to prevent the axial displacement of the pendulum support in the direction of the radial portion of the hub.

5. Device according to one of Claims 1 to 4, in which the first bearing comprises an axial protuberance (100) serving as an axial support surface for the second guiding washer.

6. Component for a motor vehicle transmission system, the component being in particular a dual-mass flywheel, a hydrodynamic torque converter or a friction disc, comprising a damping device (4) according to any one of Claims 1 to 5.

7. Transmission assembly for a motor vehicle, designed to be arranged between a heat engine (1) equipped with a crankshaft and a gearbox (2) equipped with an input shaft, said assembly comprising:
- an electric machine (500) comprising a stator (501) and a rotor (502) that are mobile in rotation about an axis X;
- a clutch (330) arranged to couple or decouple in rotation the crankshaft of the motor and the rotor;
- a torsion damping device (4) according to one of Claims 1 to 5, the damping device being arranged to transmit a torque and damp the acyclicities of rotation between the rotor and the gearbox input shaft.
